# EUROPEAN PATENT APPLICATION

(11) **EP 1 548 057 A1**
(43) Date of publication of application: **29.06.2005**
(21) Application number: 03799132.0
(22) Date of filing: 25.09.2003
(51) Int. Cl.: C08L 21/00, C08K 7/06, B60C 19/00, B60C 5/00, B29C 47/88, B29K 21/00

(54) **ORIENTATED CARBON NANOTUBE COMPOSITE, PROCESS FOR PRODUCING ORIENTATED CARBON NANOTUBE COMPOSITE, AND, PRODUCED USING ORIENTATED CARBON NANOTUBE COMPOSITE, PNEUMATIC TIRE, WHEEL FOR VEHICLE, TIRE WHEEL ASSEMBLY AND DISK BRAKE**

(30) Priority: 30.09.2002 JP 2002285466; 08.10.2002 JP 2002294943; 08.10.2002 JP 2002295042; 08.10.2002 JP 2002295047; 08.10.2002 JP 2002295202; 09.10.2002 JP 2002296346
(71) Applicant: Bridgestone Corporation, Tokyo 104-8340 (JP)
(72) Inventor: KIKUCHI, Masami, Bridgestone Corporation, Kodaira-shi, Tokyo 187-8531 (JP); HARADA, Iki, Bridgestone Corporation, Kodaira-shi, Tokyo 187-8531 (JP); MIZUNO, Keiichiro, Bridgestone Corporation, Kodaira-shi, Tokyo 187-8531 (JP); TANUMA, Itsuo, Bridgestone Corporation, Kodaira-shi, Tokyo 187-8531 (JP); OGAWA, Masao, Bridgestone Corporation, Kodaira-shi, Tokyo 187-8531 (JP); AIZAWA, Satoshi, Bridgestone Corporation, Kodaira-shi, Tokyo 187-8531 (JP); AOIKE, Yukio, Bridgestone Corporation, Kodaira-shi, Tokyo 187-8531 (JP); SHIZUKU, Takahisa, Bridgestone Corporation, Kodaira-shi, Tokyo 187-8531 (JP)
(74) Representative: Whalley, Kevin
(86) International application number: PCT/JP2003/012267
(87) International publication number: WO 2004/031289

(57) **Abstract**

A carbon nanotube orientated composite formed by orientating carbon nanotubes in a given direction in a matrix having a heat conductivity lower than that of carbon nanotube, in which at least a part of carbon nanotubes are contacted with each other to be continuous from one end to the other end between both ends in the orientated direction, is provided as a material having a heat conductivity considerably higher than that of copper, aluminum or the like or a material to be disposed in rubber material having a low heat releasing characteristic to considerably improve the heat conduction, and also there are provided a method of producing the same as well as a pneumatic tire, a wheel for a vehicle, a tire-wheel assembly and a disc brake using this material.

## Description

### TECHNICAL FIELD

This invention relates to a carbon nanotube orientated composite formed by orientating carbon nanotubes in a matrix and a method of producing the same as well as a pneumatic tire, a wheel for a vehicle, a tire-wheel assembly and a disc brake having a heat dissipation improved by using the carbon nanotube orientated composite.

### BACKGROUND ART

As a general-purpose heat conductive material for thermal machine accompanied with a phenomenon of heat exchange and heat conduction, or for heat dispersion have hitherto been used a cast iron, stainless steel, copper and copper alloy, aluminum and aluminum alloy, nickel and nickel alloy, titanium and titanium alloy, zirconium alloy and the like. Particularly, copper, aluminum and the like having a highest heat conductivity over a temperature range from room temperature to higher temperature are used in thermal machines requiring a high heat conductivity such as heat exchangers and the like.

However, thermal machines having a higher heat conductivity or heat efficiency are demanded with an increasing requirement to energy saving in recent years, and hence it is required to develop general-purpose heat conductive materials having a heat conductivity higher than that of copper, aluminum or the like. Also, in the parts such as a brake, a wheel for a vehicle and the like, it is desired to further improve heat releasing characteristics of these parts for improving the braking performance or controlling the temperature rise of the tire during the running at higher speed to ensure the durability of the tire.

On the other hand, since elastic bodies such as rubber and the like are generally materials having a low heat conductivity, they generate heat through repetitive deformation, and store the generated heat and hence the temperature of rubber itself becomes higher to promote heat deterioration thereof. In the parts including rubber portion subjected to repetitive deformation such as tire and the like, therefore, it is required to rapidly release the generated heat. As a countermeasure therefor, it is attempted to improve the heat conduction by compounding a rubber component with a filler or the like having a heat conductivity higher than that of the rubber component. However, in order to obtain a satisfactory effect, it is required to fairly increase the compounding amount of the filler or the like, and as a result, there are caused problems that the dispersion of the filler becomes non-uniform and dynamic properties are lowered.

The invention is made considering such problems and is to provide materials having a heat conductivity considerably higher than that of copper aluminum or the like and capable of considerably improving a heat conducting property in the incorporation into rubber material having low heat releasing characteristics and a method of producing these materials. Also, it is to provide parts capable of improving the heat releasing characteristics by using such a material.

### DISCLOSURE OF THE INVENTION

The invention is made for achieving the above objects, and the summary, construction and functions are as follows.

(1) The invention is a carbon nanotube orientated composite in which carbon nanotubes are orientated in a matrix having a heat conductivity lower than that of the carbon nanotube in a given direction, and at least a part of the carbon nanotubes are contacted with each other to become continuous from one end to the other end between both ends in the orientated direction.

The carbon nanotube is a structural body made of carbon atom having a diameter of about few nm to few hundreds nm and has an extremely fine tubular structure of an order corresponding to 10⁻³ times of usual carbon fiber (CF)(average diameter: not less than 5 µm, length: about 100 µm). Although the heat conductivity of the carbon nanotube itself is not clear because the measuring method is not established, it is theoretically guessed from the crystal structure that the heat conductivity is very high. In the carbon nanotube orientated composite according to the invention, the carbon nanotubes orientated in the matrix are contacted with each other and connected from one end to the other end between both the ends in the orientated direction to form a carbon nanotube continuous body, so that when the carbon nanotube orientated composite is arranged in a part to be heat-released so as to locate one end of the continuous body at a high temperature side and the other end thereof at a low temperature side, the heat releasing characteristics of this part can be improved.

(2) The invention is a carbon nanotube orientated composite according to the item (1), wherein a length of the carbon nanotube is 0.1-30 µm and a diameter thereof is 10-300 nm.

When the length is shorter than 0.1 µm, the heat conductive length of the carbon nanotube itself is short and it is difficult to form a continuous body by contacting the carbon nanotubes with each other because the number of end portions of nanotubes becomes large, while when it exceeds 30 µm, the carbon nanotubes are hardly orientated due to the tangling and it is difficult to produce the continuous body.

When the diameter is less than 10 nm, the production yield is bad and the productivity is poor and the cost is high, and hence the use as a general-purpose good becomes difficult, while when it exceeds 300 nm, the surface area is small and the heat conduction is poor.

(3) The invention is a carbon nanotube orientated composite according to the item (1) or (2), wherein the matrix is a metallic material.

According to this invention, since the matrix is a metallic material having a high heat conductivity, a higher heat conductivity can be guaranteed.

(4) The invention is a carbon nanotube orientated composite according to the item (3), wherein a compounding ratio of the metallic material and the carbon nanotube is 0.1-5 parts by mass of the carbon nanotube to 100 parts by mass of the metallic material.

In order to guarantee the heat conductivity considerably higher than that of aluminum as the conventionally known high heat conductive material, it is necessary to include not less than 0.1 part by mass of the carbon nanotube per 100 parts by mass of the metallic material, while when the amount of the carbon nanotube exceeds 5 parts by mass, the carbon nanotubes can not be sufficiently dispersed in the metallic material, and hence the consolidated portion of the carbon nanotube or the cavity portion due to the entrapping of air is undesirably caused.

(5) The invention is a carbon nanotube orientated composite according to the item (3) or (4), wherein the metallic material is one or more of a metal selected from Al, Cu and Mg or an alloy containing the selected metal.

According to this invention, a higher heat conductivity can be given because any one of Al, Cu and Mg is included as the metallic material. Further, these metals are low in the melting point, so that a melt dispersing the carbon nanotubes can be formed at a lower temperature, and also they are soft and high in the ductility and rich in the processability, which are preferable in view of the production.

(6) The invention is a carbon nanotube orientated composite according to any one of the items (3)-(5), wherein a heat conductivity of the carbon nanotube in the orientated direction is not less than 300 W/m · K.

According to this invention, the heat conductivity is considerably higher than the heat conductivity: 240 W/m · K of aluminum as a high heat conductive material, so that an excellent heat releasing characteristics can be obtained by properly setting a direction of the carbon nanotube orientated composite and arranging in the part to be heat-released.

(7) The invention is a carbon nanotube orientated composite according to the item (1) or (2), wherein the matrix contains a rubber component.

According to this invention, the matrix contains the rubber component, so that if it is intended to dispose the carbon nanotube orientated composite in rubber such as a tire or the like to improve the heat releasing characteristics of the tire, since the composite is high in the affinity with the surrounding rubber and the rubber component has a flexibility, it can deform following to the surrounding rubber without obstructing the deformation of the surrounding rubber, and also the breakage of the composite itself is not caused.

(8) The invention is a carbon nanotube orientated composite according to the item (7), wherein a compounding ratio of the rubber component and the carbon nanotube is 5-100 parts by mass based on 100 parts by mass of the rubber component.

When the amount of the carbon nanotube is less than 5 parts by mass, the effect of improving the heat conduction is low because the contact between the carbon nanotubes is less, while when it exceeds 100 parts by mass, the processability in the mixing, shaping or the like lowers.

(9) The invention is a carbon nanotube orientated composite according to the item (7) or (8), wherein the rubber component is butyl rubber.

According to this invention, butyl rubber is used as the rubber component, so that the balance between the coat and the performance is good, and further there are merits that the tensile strength is low for facilitating the milling, and the gas permeability is low, and the resistance to permeation and resistance to corrosion of magnetic powder are excellent, and the viscosity is low for facilitating the kneading and the like.

(10) The invention is a carbon nanotube orientated composite according to any one of the items (7)-(9), wherein a heat conductivity of the carbon nanotube in the orientated direction is not less than 0.15 W/m · K.

According to this invention, since the heat conductivity of the carbon nanotube in the orientated direction is made not less than 0.15 W/m · K, there can be provided a heat conductivity considerably higher than the heat conductivity of rubber, and hence the excellent heat releasing characteristics can be obtained by properly setting a direction of the carbon nanotube orientated composite and arranging in the rubber part to be heat-released.

(11) The invention is a method of producing carbon nanotube orientated composite according to any one of the items (3)-(6), which comprises fluidizing a melt dispersed carbon nanotubes into a molten metallic material and cooling and solidifying the melt on the way of the fluidization to orientate the carbon nanotubes.

According to this invention, the melt is cooled and solidified on the fluidizing stage, the carbon nanotubes can be easily orientated and also there can be prevented the breakage of the orientation of the carbon nanotubes after the orientation.

(12) The invention is a method of producing carbon nanotube orientated composite according to any one of the items (7)-(10), which comprises milling a rubber component and carbon nanotubes, extruding the milled mass through an extruder and drawing the extruded mass at a drawing rate faster than an extrusion rate.

According to this invention, the carbon nanotubes can be orientated in a longitudinal direction by applying a tension corresponding to the drawing rate faster than the extrusion rate (a length of the extruded mass per unit time) to the extruded mass.

(13) The invention is a pneumatic tire in which carbon nanotube orientated composites according to any one of the items (7)-(10) are arranged in parallel to each other and covered with a coating rubber to form a heat releasing member, and the heat releasing member is arranged so that one end of the carbon nanotube orientated composite is exposed at an outer surface of the tire and the other end thereof is positioned in an interior of the tire.

The tire absorbs energies through vibration of a vehicle, impact and the like based on a large deformation during the running to contribute to ride comfort and safety of the vehicle, but the heat generation is large owing to the large energy absorbability and hence it is an important matter to efficiently release the heat generated in the tire for ensuring the improvement of tire durability and the safety. In order to enhance the property of releasing the heat generated in the tire, it is important to improve heat conduction from a heat-generated site in the interior of the tire to a surface of the tire.

According to the invention, one end of the carbon nanotube orientated composite in the heat releasing member is exposed to the outer surface of the tire, so that even if heat is generated in the tire through the deformation during the running, the generated heat moves from one end of the carbon nanotube orientated composite located inside the tire through the carbon nanotube orientated composite to the other end thereof exposed to the outer surface, and can be efficiently released from the tire because the exposed portion is always cooled by air outside the tire.

Also, the heat releasing member is formed by covering the carbon nanotube orientated composites with the coating rubber, so that the affinity of the carbon nanotube orientated composite with rubber in the tire can be enhanced to ensure the durability.

(14) The invention is a pneumatic tire according to the item (13), wherein the heat releasing member is arranged in the vicinity of at least one of an end of a belt and an turnup end of a carcass.

The term "turnup end of carcass" used herein means an end of the carcass wound around a bead core from an inside of the tire toward an outside thereof. The vicinity of the belt end and the vicinity of the carcass turnup end are portions most easily causing the heat generation in the interior of the tire during the running of the tire. According to the invention, an end of the heat releasing member is arranged in the vicinity of at least one of these ends, so that there can be effectively prevented the lowering of the durability due to the heat deterioration.

(15) The invention is a pneumatic tire according to the item (13) or (14), wherein the heat releasing member has a thickness of 1-5 mm.

When the thickness of the heat releasing member is less than 1 mm, a sectional area for heat release is small and the heat release is insufficient, while when it exceeds 5 mm, a ratio of the surrounding reinforced rubber decreases to cause problems in the durability and peeling.

(16) The invention is a wheel for a vehicle provided with a rim enclosing an interior portion of a tire in consort with the tire, in which the carbon nanotube orientated composite according to any one of the items (3)-(6) is arranged so as to pass through the rim in its thickness direction, and an end of the carbon nanotube orientated composite is positioned in a portion contacting with the tire or a portion exposing to the interior portion of the tire and the other end thereof is positioned in a portion exposing to an atmosphere.

In order to effectively release the heat generated in the tire, it is important to lower a temperature in the interior portion of the tire raised by the heat generation of the tire in addition to the rise of the heat conductivity form the interior of the tire to the surface thereof. According to the invention, the carbon nanotube orientated composite is arranged so as to pass through the rim in the thickness direction, so that heat can be moved from a side of the rim contacting in the interior portion of the tire to a side opposite thereto in the thickness direction and contacting with an atmosphere at a short pass and hence the temperature of the interior portion of the tire can be efficiently lowered.

(17) The invention is a wheel for a vehicle according to the item (16), wherein a high heat conductive member having a heat conductivity of not less than 300 W/m · K is coated onto a surface of the rim, and the high heat conductive member is extended from a first portion contacting with the tire or exposing to the interior portion of the tire to a second portion exposing to the atmosphere.

According to this invention, the high heat conductive member has a heat conductivity of not less than 300 W/m · K and is higher than the heat conductivity of a main part constituting the rim such as aluminum or the like, and the first portion of the high heat conductive member is exposed to the tire or the interior portion of the tire being a high temperature side and the second portion thereof is exposed to the atmosphere being a low temperature side, respectively, so that the heat of the tire or in the interior portion of the tire can be transmitted to the high heat conductive member and rapidly discharged to the atmosphere side and further the heat in the tire or the interior portion of the tire can be efficiently released, whereby the wheel for the vehicle having more excellent heat releasing performance can be constructed.

(18) The invention is a wheel for a vehicle according to the item (17), wherein the high heat releasing member is an alloy of a metal selected from the group consisting of Al, Mg and Cu or a sintered body of the selected metal and a diamond.

According to this invention, the high heat conductive member is made of the alloy of the selected metal or the sintered body of the metal and diamond, so that heat from the tire can be more effectively released by easily making the heat conductivity of the high heat conductive member larger than that of the remaining member constituting the wheel.

(19) The invention is a wheel for a vehicle according to the item (17) or (18), wherein a cooling means is arranged on an exposed surface of the second portion of the high heat conductive member.

According to this invention, the cooling means is arranged on the exposed surface of the second portion of the high heat conductive member constituting the low temperature side, so that the temperature difference between both the portions of the high heat conductive member can be made large and hence the heat releasing can be further promoted. In this case, the cooling means includes a cooling fin provided on the heat releasing surface, a cooling fin provided on an exterior, all means for promoting the heat releasing of the heat releasing surface inclusive of the covering of the heat releasing surface with a high heat releasing member.

(20) The invention is a wheel for a vehicle according to the item (19), wherein a cooling fin is arranged on the surface as the cooling means.

According to this invention, the cooling means is constructed with the cooling fin, so that the cooling can be simply attained in a higher efficiency.

(21) The invention is a wheel for a vehicle according to any one of the items (16)-(20), wherein a heat collecting fin is arranged on a portion contacting with the interior of the tire.

According to this invention, the heat collecting fin is arranged on the surface contacting with the interior of the tire, so that heat inside the tire can be absorbed efficiently and the cooling can be attained simply in a higher efficiency.

(22) The invention is a tire-wheel assembly comprising a wheel for a vehicle according to any one of the items (16)-(21) and a tire mounted on the wheel for the vehicle and a gas inclusive of at least helium gas filled in an interior of the tire defined between the tire and the wheel.

A heat conductivity of helium gas is 0.18 W/m · K, which is considerably higher than a heat conductivity: 0.026 W/m · K of air usually filled in the interior of the tire. According to this invention, the gas inclusive of helium gas is filled, so that the heat of the tire can be efficiently transmitted to the wheel as compared with the conventionally used gas, and hence the heat releasing from the tire can be more promoted.

(23) The invention is a tire-wheel assembly comprising a wheel for a vehicle according to any one of the items (16)-(22) and a tire mounted on the wheel for the vehicle and elastic balls filled in an interior of the tire defined between the wheel and the tire.

According to this invention, the elastic balls are filled in the interior of the tire, so that the elastic balls bound about inner wall face of the tire or the wheel in the interior of the tire during the running of the tire to efficiently convect the gas in the interior of the tire and hence the flowing ratio of heat from the tire to the wheel can be improved to further release heat from the tire.

(24) The invention is a disc brake comprising a rotor and a pad decelerating the rotor while sliding to the rotating rotor, in which a carbon nanotube orientated composite according to any one of the items (3)-(6) is arranged on at least one part of the rotor and the pad, and an end of the carbon nanotube orientated composite is exposed to a sliding surface of the part or located in the vicinity of the sliding surface and the other end thereof is exposed to a surface other than the sliding surface of the part.

The disc brake used in the vehicle or the like comprises a rotating rotor and a pad sandwiching both surfaces of the rotor and sliding to these surfaces to lower a rotating speed of the rotor through a friction force, but even if the rotor is sandwiched by the pads at the same force, a friction coefficient of the sliding surface is largely affected by a temperature at this place. Therefore, it is important to make the temperature constant for stably ensuring the braking performance, but the brake is not particularly provided with a cooling device, so that it is important to rapidly lower the temperature of the sliding surface to the surrounding temperature as far as possible.

According to this invention, the carbon nanotube orientated composite is extended from the sliding surface or the vicinity thereof to the surface as a heat releasing surface other than the sliding surface, so that heat generated at the sliding surface can be transmitted through the carbon nanotube orientated composite and rapidly released from the heat releasing surface and hence the disc brake having a higher heat releasing performance can be constructed. Moreover, the feature that one end of the carbon nanotube orientated composite is terminated in the vicinity of the sliding surface means that the end is terminated at a position shallowest from the sliding surface in a depth direction within a range that the end is not exposed to the sliding surface even if the sliding surface is worn.

(25) The invention is a disc brake according to the item (24), which further comprises a cooling means for cooling the surface of the part exposing the other end.

According to this invention, the cooling means is disposed on the surface exposing the other end of the carbon nanotube orientated composite as a heat releasing surface, so that the temperature difference can be made large between both ends of the carbon nanotube orientated composite and further heat releasing can be promoted. In this case, the cooling means includes a cooling fin provided on the heat releasing surface, a cooling fin provided on an exterior, all means for promoting the heat releasing of the heat releasing surface inclusive of the covering of the heat releasing surface with a high heat releasing member.

(26) The invention is a disc brake according to the item (25), wherein the cooling means is a cooling fin disposed on the surface.

According to this invention, the cooling means is constituted with the cooling fin, so that the cooling can be attained simply in a high efficiency.

### BRIEF DESCRIPTION OF THE DRAWINGS

FIG. 1 is a schematically perspective view of the carbon nanotube orientated composite according to a first embodiment of the invention;
FIG. 2 is a schematically side view illustrating a portion of contacting carbon nanotubes with each other;
FIG. 3 is a schematically perspective view of a carbon nanotube orientated composite extending along a curve;
FIG. 4 is a view illustrating a method of producing a carbon nanotube orientated composite;
FIG. 5 is a schematically perspective view of the carbon nanotube orientated composite according to a second embodiment of the invention;
FIG. 6 is a section view of an embodiment of the pneumatic tire according to the invention;
FIG. 7 is a section view taken along an arrow A-A of FIG. 6;
FIG. 8 is a section view taken along an arrow B-B of FIG. 6;
FIG. 9 is a schematically section view of a half part of a wheel for a vehicle;
FIG. 10 is a schematically section view illustrating a portion C of FIG. 9;
FIG. 11 is a section view taken along a line D-D of FIG. 9;
FIG. 12 is a schematically section view of a disc brake; and
FIG. 13 is a schematically perspective view of a rotor.

### BEST MODE FOR CARRYING OUT THE INVENTION

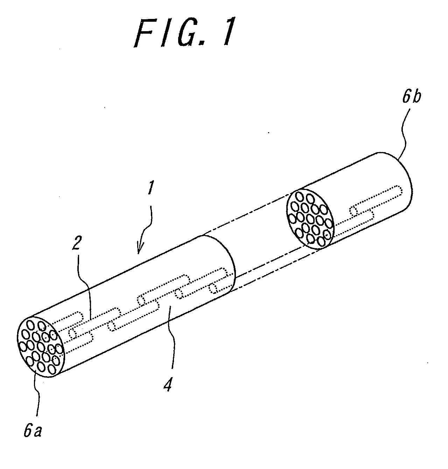

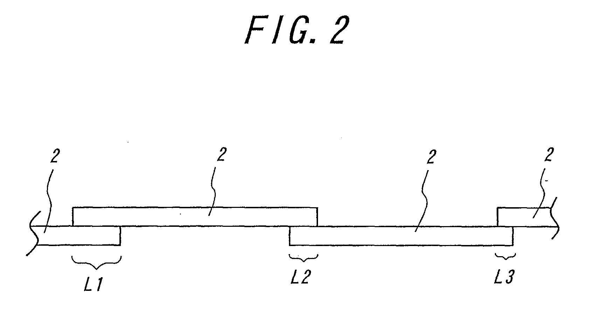

An embodiment of the carbon nanotube orientated composite is described with reference to the drawings. FIG. 1 is a schematically perspective view of a first embodiment of the carbon nanotube orientated composite 1, and FIG. 2 is a schematically side view of a portion contacting carbon nanotubes 2 with each other.

The carbon nanotube orientated composite 1 comprises many carbon nanotubes 2 orientated in a given direction in a matrix 4 made of a metal, in which at least a part of the carbon nanotubes 2 contact with each other and continuously extend from one end face 6a to the other end face 6b between the end faces 6a, 6b of the carbon nanotube orientated composite 1.

The carbon nanotube 2 is a structural body made of a carbon atom having a diameter of about few nm to few hundreds nm and has an extremely fine tubular structure of an order corresponding to 10⁻² times of usual carbon fiber (average diameter: not less than 5 µm, length: about 100 µm). A heat conductivity of the carbon nanotube 2 itself is not clear in the accurate numerical value though the measuring method is not established, but is known to be very high as theoretically guessed from its structure.

The carbon nanotube 2 used in the invention is preferable to have a length of 0.1-30 µm, more preferably 0.1-10 µm. When the length is shorter than 0.1 µm, the heat conductive length of the carbon nanotube itself is short and it is difficult to form a continuous body by contacting the carbon nanotubes with each other because the number of end portions of nanotubes becomes large, while when it exceeds 30 µm, the carbon nanotubes are hardly orientated due to the tangling and it is difficult to produce the continuous body.

The carbon nanotube 2 is preferable to have a diameter of 10-300 nm, more preferably 100-250 nm. When the diameter is less than 10 nm, the production yield is bad and the productivity is poor and the cost is high, and hence the use as a general-purpose good becomes difficult, while when it exceeds 300 nm, the surface area is small and the heat conduction is poor.

The carbon nanotube is preferable to be synthesized by a plasma CVD (chemical vapor deposition) process, a thermal CVD process, a surface decomposition process, a fluidized vapor synthesis process, an arc discharge process or the like. Among them, the fluidized vapor synthesis process is particularly preferable from a viewpoint of mass production.

As the carbon nanotube orientated composite 1 can be used anyone of single layer nanotube and multi-layer nanotube. The single layer nanotube has a bundle structure, but the number of tubes per one bundle is not particularly limited. Also, the number of tube layers in the multi-layer nanotube is not particularly limited.

Furthermore, commercially available carbon nanotube can be properly used as the carbon nanotube orientated composite 1. For example, there can be used vapor process carbon fiber VGCF (trade mark) made by Showa Denko Co., Ltd. and carbon nanotube made by Materials Technologies Research (MTR) in USA.

In this case, the size of the carbon nanotube orientated composite 1 is about 0.1-2.0 nm and the length thereof can be freely selected if necessary.

As the metal of the matrix can be used aluminum, copper, magnesium and the like. In the embodiment of the invention, a mixing ratio of the carbon nanotube per 100 parts by mass of aluminum is 0.1-5 parts by mass. As a result, the heat conductivity is 300-12000 W/m · K, which is higher by 50 times at maximum than the heat conductivity of usual aluminum of 240 W/m · K.

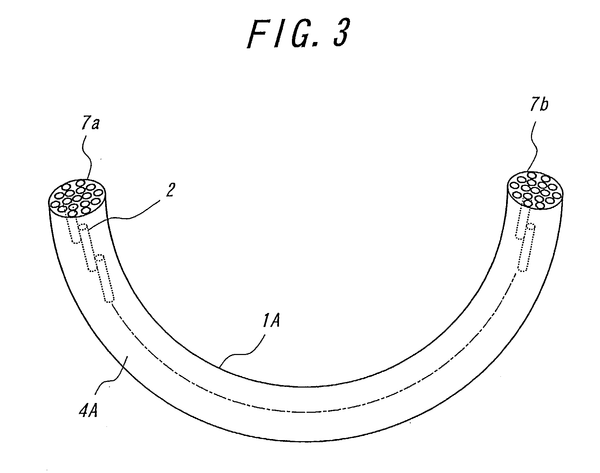

FIG. 3 is a schematically perspective view of a carbon nanotube orientated composite 1A according to another embodiment of the invention. In this case, the carbon nanotube orientated composite 1A extends along a curve and comprises many carbon nanotubes 2 orientated in the extending direction in a matrix 4A made of a metal likewise the carbon nanotube orientated composite 1, in which these carbon nanotubes 2 communicate with each other and continuously extend from one end face 7a to the other end face 7b so as to open at both end faces 7a, 7b of the carbon nanotube orientated composite 1A.

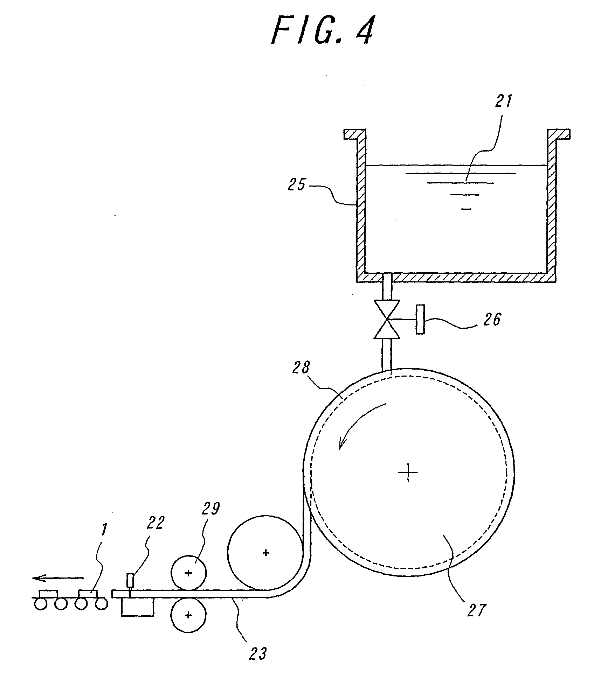

The method of producing the carbon nanotube orientated composite 1 shown in FIG. 1 is explained with reference to FIG. 4. There is provided a melt 21 of aluminum mixed and dispersed with carbon nanotubes 2 in a container 25, and the carbon nanotubes 2 are not orientated at this state. Then, a valve 26 disposed at an outlet of the container 25 is opened and the melt 21 is flowed out from the container 25 at a given flow rate.

The flowed melt 21 is poured into a groove 28 formed in a cooling drum 27 rotating in an anti-clockwise direction in the figure. In this case, the peripheral rate of the cooling drum is set to be faster than the flow rate of the melt 21, so that the melt 21 id drawn out by the groove 28 in the cooling drum 27 and hence the carbon nanotubes 2 can be orientated in the flowing direction by the drawing. Also, the melt'21 is rendered into a semi-solidified state by the cooling action of the cooling drum 27 before it is discharged from the groove of the cooling drum 27, and the orientation of the carbon nanotubes 2 is never turned back at such a semi-solidified state. After the discharge from the cooling drum 27, the melt is further cooled and solidified to form a solid body 23. The solid body 23 is shaped into a circle at section through rolling rolls 29 and cut into a given length by a cutter to form a carbon nanotube orientated composite 1.

In the above production method, the carbon nanotubes 2 are orientated in the flowing direction at a stage of flowing the melt 21. In this case, the carbon nanotubes 2 can be orientated in a given direction by making the peripheral rate of the cooling drum 27 faster than the flow rate of the melt 21, and also can be continuously formed.

In case of producing the carbon nanotube orientated composite 1A extending along the curve, it can be produced by pouring the melt 21 into a cylindrical mold having a radius of curvature corresponding to the carbon nanotube orientated composite 1A instead of the cylindrical mold 28 and cooling the melt 21 flowing therein.

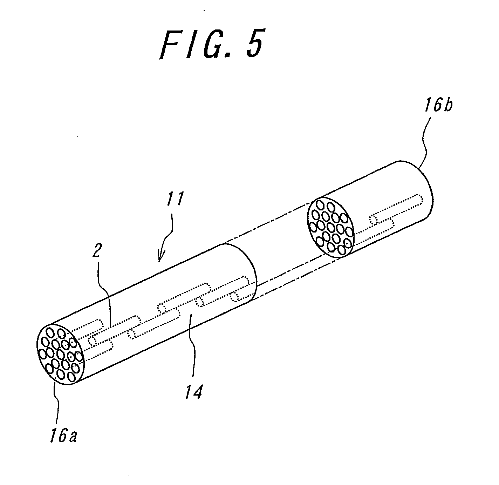

Next, a carbon nanotube orientated composite 11 according to a second embodiment of the invention is described. FIG. 5 is a schematically perspective view of the carbon nanotube orientated composite 11 of the second embodiment.

The carbon nanotube orientated composite 11 comprises many carbon nanotubes 2 orientated in a given direction in a matrix 14 containing a rubber component, in which at least a part of carbon nanotubes 2 contact with each other and continuously extend from one end face 16a to the other end face 16b between end faces 16a, 16b of the carbon nanotube orientated composite 11. The mutually adjoining carbon nanotubes 2 are contacted on their outer peripheral faces with each other at L1, L2 or L3 as shown in FIG. 2 to form a heat conductive pass in which substances having a high heat conductivity are connected in series.

The details of the carbon nanotube 2 used in the carbon nanotube orientated composite 11 are explained as in the first embodiment and omitted here.

As the rubber component constituting the carbon nanotube orientated composite 11 are mentioned natural rubber; general-purpose synthetic rubbers such as emulsion-polymerized styrene-butadiene rubber, solution-polymerized styrene-butadiene rubber, high cis-1,4 polybutadiene rubber, low cis-1,4 polybutadiene rubber, high cis-1,4 polyisoprene rubber and the like; diene-based specific rubbers such as nitrile rubber, hydrogenated nitrile rubber, chloroprene rubber and the like; olefinic specific rubbers such as ethylene-propylene rubber, butyl rubber, halogenated butyl rubber, acrylic rubber, chlorosulfonated polyethylene and the like; and other specific rubbers such as hydrine rubber, fluorine rubber, polysulfide rubber, urethane rubber and the like. Among them, the natural rubber and general-purpose synthetic rubbers are preferable from a viewpoint of a balance between cost and performances, and the butyl rubber is preferable from viewpoints that the tensile strength is low and the kneading is easy and the gas permeability is low and the resistance to permeability is advantageous in the corrosion of magnetic powder and the viscosity is low to facilitate the kneading and the like.

The amount of the carbon nanotubes 2 compounded in the carbon nanotube orientated composite 11 is preferable to be 5-100 parts by mass per 100 parts by mass of the rubber component. When the amount is less than 5 parts by mass, the contact between the carbon nanotubes is less and the effect of improving the heat conduction is low, while when it exceeds 100 parts by mass, the operability in the mixing, shaping and the like lowers.

The carbon nanotube orientated composite 11 may be properly compounded with additives usually used in the rubber industry such as filler, vulcanizing agent, vulcanization accelerator, reinforcing member, antioxidant, softening agent and the like in addition to the rubber component and carbon nanotubes.

In the carbon nanotube orientated composite 11, the heat conductivity in the orientated direction of the carbon nanotubes is not less than 0.15 W/m · K, more preferably not less than 0.5 W/m · K.

The carbon nanotube orientated composite 11 can be produced as follows. At first, the rubber component is kneaded with the carbon nanotubes. In this case, the kneading can be conducted by properly compounding the additives usually used in the rubber industry.

Then, the kneaded mass is heated to lower the viscosity and extruded through an extruder to a low temperature side and the extruded mass is drawn by applying tension and solidified at the low temperature side. In this case, tension corresponding to a drawing rate (length of the drawn mass per unit time) faster than an extrusion rate (length of the extruded mass per unit time) is applied to the extruded mass to orientate the carbon nanotubes in a longitudinal direction. The upper limit of the tension is a level preventing the cut of the extruded mass due to the drawing.

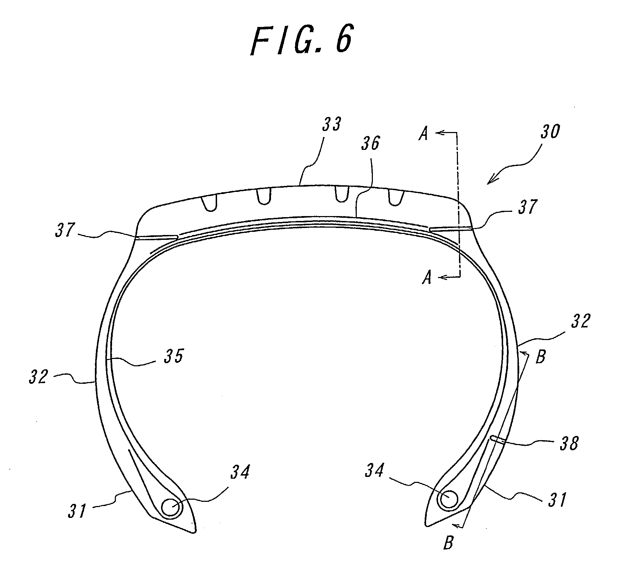

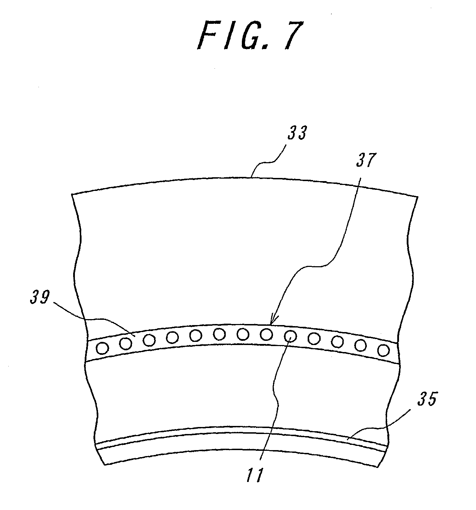

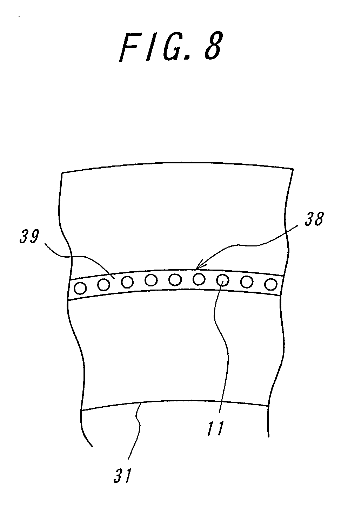

Then, an embodiment of the pneumatic tire using the carbon nanotube orientated composite 11 of the second embodiment is explained with reference to the drawings. FIG. 6 is a section view of the pneumatic tire according to an embodiment of the invention, and FIG. 7 is a section view corresponding to an arrow A-A of FIG. 6 and FIG. 8 is a section view corresponding to an arrow B-B of FIG. 6. A tire 30 comprises a pair of bead portions 31, a pair of sidewall portions 32, a tread portion 33, a carcass 35 toroidally extending between ring-shaped bead cores 34 embedded in the respective bead portions 31 and wound at both ends around the bead cores 34 from an inside toward an outside, a belt 36 arranged on an outer periphery of the carcass 35 located at the tread portion 33 and comprised of at least two belt layers, and a pair of cone-shaped heat releasing members 37 and a pair of cone-shaped heat releasing members 38 having a central axis of the tire as an axial center, in which the heat releasing member 37 is arranged so as to extend from the vicinity of a belt end to an outer surface of the tire and the heat releasing member 38 is arranged so as to extend from the vicinity of a turnup end of the carcass 35 to the outer surface of the tire.

Moreover, it is preferable that these heat releasing members 37, 38 are directed to such a direction that the distance to the outer surface of the tire becomes shortest from a viewpoint of the heat conduction.

Each of the heat releasing members 37, 38 is constructed with a plurality of the carbon nanotube orientated composites 11 and a coating rubber 39 covering these carbon nanotube orientated composites 11, in which the carbon nanotube orientated composite is arranged so as to expose its both ends to both the end faces of the cone-shaped member.

The width of the heat releasing member 37, 38 corresponds to a distance from the vicinity of the belt end or carcass turnup end to the outer surface of the tire determined in correspondence with a size of the target tire. Also, the carbon nanotube orientated composites 11 have a diameter of 0.1-2.0 mm, preferably 0.1-1.0 mm and are arranged at a given interval in the circumferential direction.

Moreover, the pneumatic tire 30 are provided with both of the heat releasing members 37 and 38, but may be provided with only one of the heat releasing members 37, 38.

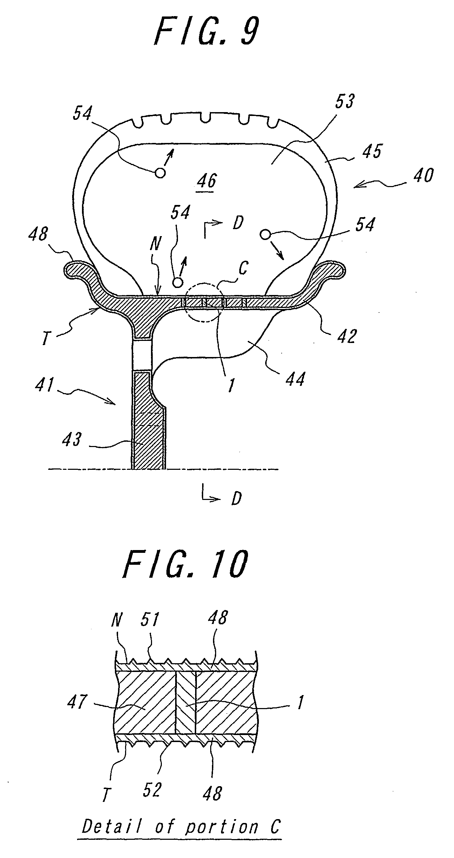

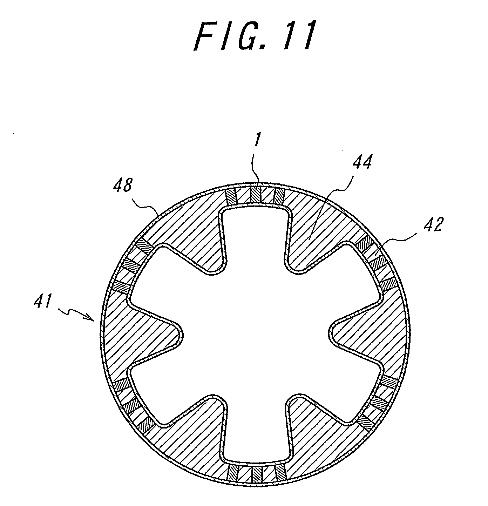

Next, an embodiment of the wheel for a vehicle using the carbon nanotube orientated composite 1 of the first embodiment is explained with reference to the drawings. FIG. 9 is a schematically section view of a half part of a wheel 41 for a vehicle, and FIG. 10 is a schematically section view showing details of a portion C in FIG. 9 and FIG. 11 is a section view taken along a line D-D of FIG. 9. The wheel 41 for the vehicle comprises a rim 42 supporting a tire 45 and defining a tire interior 41 together with the tire 45, and a disc 43 connected to the rim 42 and attached to a hub of the wheel. Also, a plurality of ribs 44 reinforcing the rim 42 are arranged on the circumference of the rim.

A plurality of carbon nanotube orientated composites 1 are arranged so as to pass through the rim 42 in a thickness direction, in which one end of the composite is arranged at a portion of the rim 42 contacting with the tire 45 or exposing to the tire interior 46 and the other end thereof is arranged on a portion exposing to an atmosphere at an opposite side in the thickness direction of the rim 42.

Also, a high heat conductive member 48 is coated on surfaces of the rim 42, disc 43 and rib 44 constituting the wheel 41 over their full surfaces. When the surface contacting with the tire 45 and surface exposing to the tire interior 46 are a first portion N of high temperature side and the surface other than the surfaces N is a second portion T of low temperature side, heat is moved from the first portion through the carbon nanotube orientated composites 1 and high heat conductive members 48 to the second portion and released therefrom.

Since the carbon nanotube orientated composite 1 and high heat conductive member 48 is higher in the heat conductivity than a matrix 47 as a main member of the wheel 41, heat from the tire 45 or the tire interior 46, which has been discharged to the atmosphere only through the matrix 47 in the prior art, is mainly released to the atmosphere through the carbon nanotube orientated composites 1 and the high heat conductive member 48 and hence the considerably excellent heat releasing characteristic can be provided. It is preferable that the carbon nanotube orientated composite 1 and the high heat conductive member 38 have a heat conductivity of not less than 300 W/m · K.

Also, a plurality of convex heat-collecting fins 51 are disposed on the surface N of the high heat conductive member 48 exposing to the tire interior 46, whereby heat from the tire interior 46 can be efficiently collected, while a plurality of convex cooling fins 52 are disposed on the surface T of the high heat conductive member 48 exposing to the atmosphere. These cooling fins 52 constitute a cooling device for efficiently releasing heat transmitted through the carbon nanotube orientated composites 1 and the high heat conductive member 48 to the atmosphere.

As the high heat conductive member 48 can be used an alloy of a metal selected from the group consisting of Al, Mg and Cu having a high heat conductivity or a sintered body of the selected metal and diamond, or the like.

The carbon nanotube orientated composites 1 are arranged over a full surface of a portion of the rim 42 that is not provided with the rib 44 so as to uniformly expose to the tire interior 46 and in this case, it is preferable that an exposed area ratio is 5-50%. When the ratio is less than 5%, the effect of sufficiently improving the heat releasing is not obtained, while when it exceeds 50%, the strength required as the wheel can not be satisfied. Also, when the carbon nanotube orientated composites 1 are arranged in the matrix 47, a hole receiving the carbon nanotube orientated composite 1 is first formed in the rim 42 and the carbon nanotube orientated composites are inserted and fixed in the hole. In the fixation can be used a method using an adhesive, a method utilizing interference fit or the like.

In order to more improve the heat releasing from the tire 45, it is effective to enhance the heat conductivity of the tire interior 46 constituting a part of a heat releasing path. For this end, the tire interior 46 is preferable to be filled with a helium gas 53 having a heat conductivity higher than air instead of air, and also a mixture of the helium gas 53 and other gas such as air can be used.

In order to randomly move elastic balls 54 in the tire interior 46, it is preferable to use elastic balls 54 easily bounding on wall face of the tire 45 or the rim 42. For this end, the elastic ball 54 is required to have a high elasticity. For example, there can be used sponge ball, rubber ball, a hollow ball filled under an internal pressure higher than an internal pressure filled in the tire interior 46 and made of rubber or resin, and the like. Also, if irregularities or fins for stirring are formed on the surface of the elastic ball 54, the stirring efficiency can be improved.

The elastic ball 54 is preferable to have a diameter of 5-10 mm. When the diameter exceeds 10 mm, heat generation becomes large due to the impact on the wall face or the friction with the gas, while when it is less than 5 mm, the sufficient stirring is not obtained. Also, the number of the elastic balls 54 filled in the tire interior 46 is preferable to be 10. When the number of the balls exceeds 10, the heat generation becomes large likewise the above case.

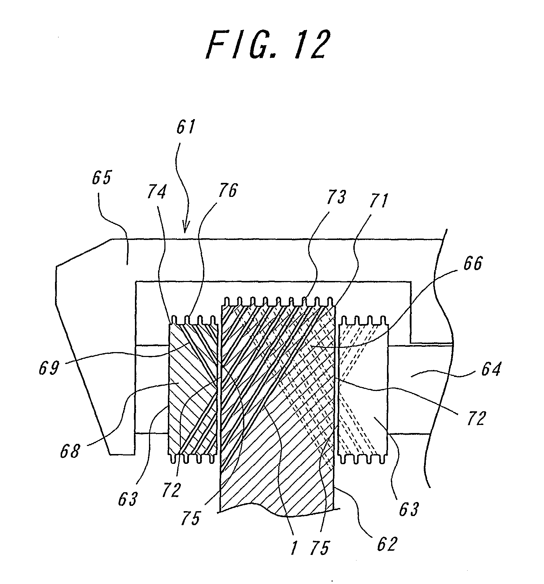

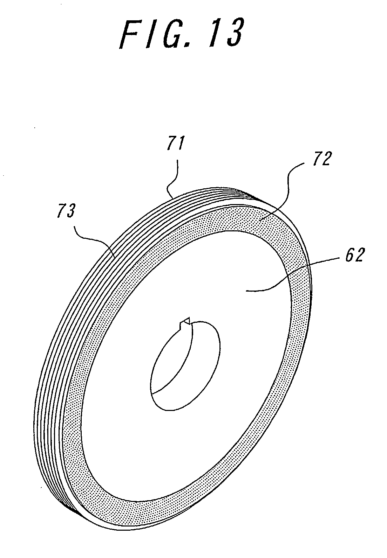

Next, an embodiment of the disc brake using the carbon nanotube orientated composite 1 of the first embodiment is explained with reference to the drawings. FIG. 12 is a schematically section view of a disc brake 61, and FIG. 13 is a schematically perspective view illustrating a rotor 62. The disc brake 61 comprises a disc-shaped rotor 62 attached to an axle and rotated therewith, and a pair of plate-shaped pads 63 sandwiching the rotor from both sides and sliding along a sliding face 72 of the rotor 62 to decelerate the rotating speed of the rotor 62 through friction force. The pads 63 are supported by a hydraulic piston 64 and a caliper 65, respectively, and driven in forward and rearward directions on the rotor 62 by these members.

A peripheral face 71 of the rotor 62 constitutes a heat releasing face releasing friction heat generated at the sliding face 72, and a plurality of convex cooling fins 73 are formed on the periphery of the face for improving s heat releasing efficiency. As a main member 66 of the rotor 62 us generally used a cast iron considering mechanical strengths, abrasion resistance and the like. In the rotor 62 according to the invention, however, a plurality of carbon nanotube orientated composites 1 exposing at one end to the sliding face 72 and exposing at the other end to the peripheral face 72 are embedded and arranged in the member 66.

The carbon nanotube orientated composites 1 can enhance the heat releasing effect of the rotor 62 because the heat conductivity in the orientated direction of the carbon nanotube is 300-1200 W/m · K as previously mentioned and is higher by about 164 times at maximum that the heat conductivity of the cast iron of 73 W/m · K constituting the member 66 around the carbon nanotube orientated composite 1.

The carbon nanotube orientated composites 1 are arranged so as to uniformly expose over a whole of the sliding face 72, and in this case the exposing area ratio is preferable to be 5-30%. When the ratio is less than 5%, the effect of sufficiently improving the heat releasing is not obtained, while when it exceeds 30%, the strength required as the sliding face can not be satisfied. Also, in order to arrange the carbon nanotube orientated composites 1 in the member 66, holes receiving the carbon nanotube orientated composites 1 are first formed in the member 66 and then the carbon nanotube orientated composites 1 are inserted and fixed in the holes. In the fixation can be used a method using an adhesive, a method utilizing interference fit or the like.

An edge face 74 of the plate-shaped pad 63 constitutes a heat releasing face releasing friction heat generated at the sliding face 75. Also, this face is provided with a plurality of convex cooling fins 76 for improving the heat releasing efficiency over the periphery of the edge face 74. As a main member 68 of the pad 63 is generally used a material such as a sintered body of a metal or the like considering the mechanical strengths, friction coefficient and the like. In the pad 63 according to the embodiment of the invention, however, a plurality of the carbon nanotube orientated composites 1 exposing at one end to the sliding face 75 and exposing at the other end to the edge face 74 are embedded and arranged in the member 68.

The carbon nanotube orientated composite 1 having a heat conductivity of 300-1200 W/m · K has a heat conductivity considerably higher than the heat conductivity of not more than 100 W/m · K in the main member 68 of the pad 63 and can enhance the heat releasing effect of the pad 63.

### EXAMPLES

The carbon nanotube orientated composite of the second embodiment and the pneumatic tire using the same are explained in detail with reference to the following examples but the invention is not limited to these examples.

### (Examples 1-15)

There are prepared various rubber compositions having a compounding recipe shown in Table 1. Then, each of these rubber composition after the kneading is extruded through an extruder at an extrusion rate of 10 m/min and drawn at a drawing rate of 15 m/min under a tension of 0-200 N/mm² and vulcanized to prepare a rod-shaped carbon nanotube orientated composite having a diameter of 1 mm in which carbon nanotubes are orientated therein.

### (Conventional Examples 1-3)

A rubber composition is kneaded in the same manner as in Example 3, 8 or 12 except that carbon nanotubes are not compounded, and extruded without applying tension and vulcanized to prepare a thread-shaped vulcanized rubber.

### (Comparative Examples 1-3)

A rubber composition having the same compounding recipe as in Example 3, 8 or 12 is prepared and kneaded and extruded through the extruder without applying tension and vulcanized to obtain a rod-shaped carbon nanotube orientated composite.

The heat conductivities of the carbon nanotube orientated composites obtained in the examples and comparative examples and the vulcanized rubbers obtained in the conventional examples are measured by means of a rapid heat conductivity meter QTM-500 made by Kyoto Densi Co., Ltd. to obtain results shown in Table 1.

Then, a plurality of rod-shaped carbon nanotube orientated composites in each of Examples 1, 2, 3 and 7 or the vulcanized rubbers in Conventional Example 1 are coated with rubber to prepare a heat releasing member, which is used to prepare a tire shown in FIG. 1 except that the heat releasing member 38 is not arranged at a position in the vicinity of the carcass turnup end. Such a tire is run on a drum at 100 km/hr over 300 km in an indoor drum test under an atmosphere of 30°C, and thereafter a temperature of a shoulder portion of the tire is measured to obtain a result as shown in Table 1. Also, for the comparison, a rubber composition containing no carbon nanotube is prepared, which is used to prepare a tire having the same structure as in the above example and then the heat conductivity and temperature of shoulder portion of the tire are measured. The measured results are also shown in Table 1. Moreover, in the tires of Examples 1, 2, 3 and 7 using the carbon nanotube orientated composite, the breakage of the composite is not observed after the running on the drum.

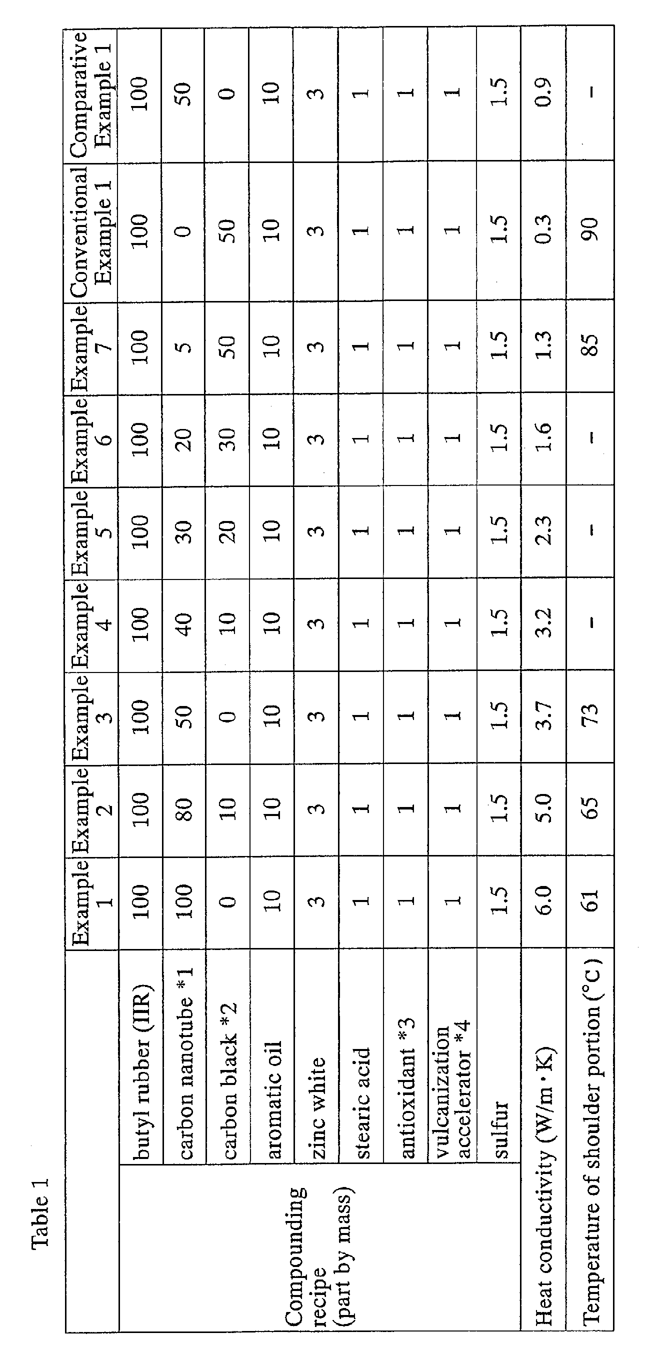

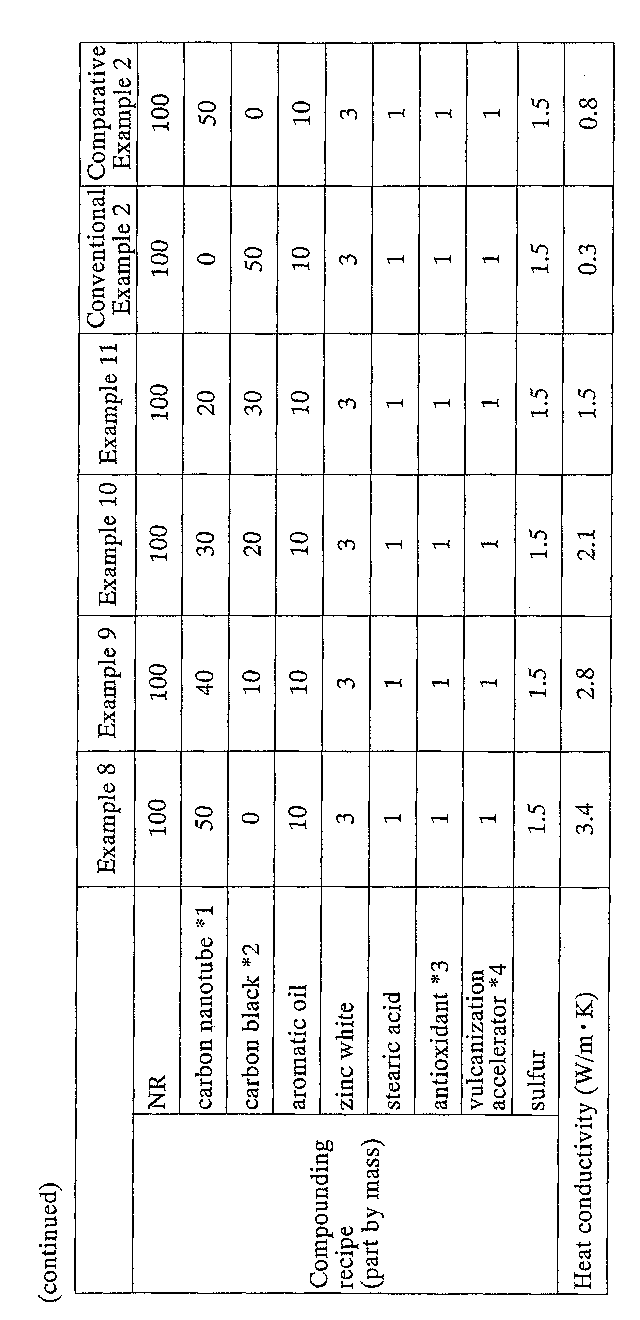

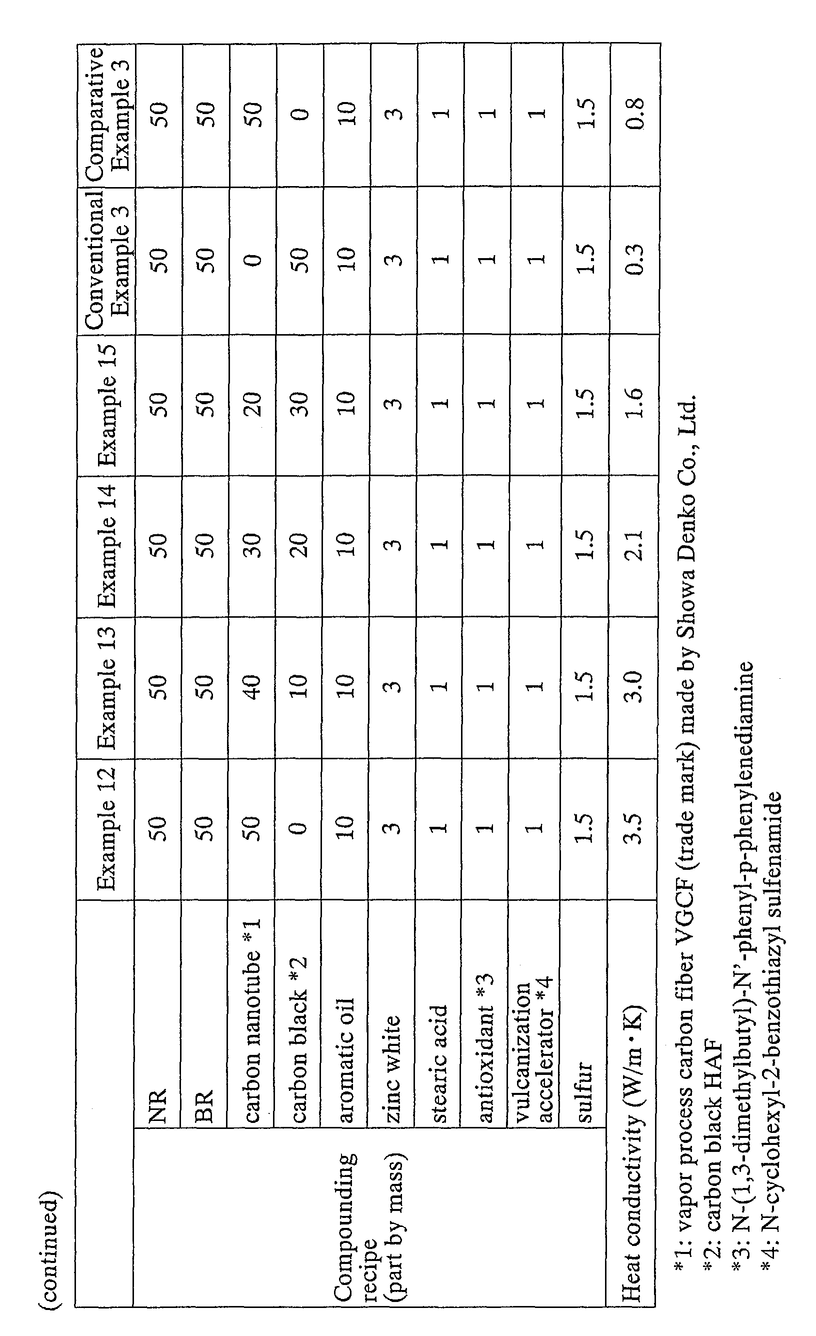

Moreover, there is provided a conventional tire having the same structure as in the tire shown in FIG. 6 except that the heat releasing member is not arranged, which is subjected to the indoor drum test in the same manner as in Example 1 and the temperature of the shoulder portion of the tire is measured to be 90°C.

### INDUSTRIAL APPLICABILITY

As seen from the above, according to the invention, there can be provided materials having a heat conductivity considerably higher than that of copper, aluminum or the like, and the heat conduction can be considerably improved by arranging it in a rubber material, and heat can be efficiently released from a tire or a brake requiring a severe heat durability.

## Claims

1. A carbon nanotube orientated composite in which carbon nanotubes are orientated in a matrix having a heat conductivity lower than that of the carbon nanotube in a given direction, and at least a part of the carbon nanotubes are contacted with each other to become continuous from one end to the other end between both ends in the orientated direction.

2. A carbon nanotube orientated composite according to claim 1, wherein a length of the carbon nanotube is 0.1-30 µm and a diameter thereof is 10-300 nm.

3. A carbon nanotube orientated composite according to claim 1 or 2, wherein the matrix is a metallic material.

4. A carbon nanotube orientated composite according to claim 3, wherein a compounding ratio of the metallic material and the carbon nanotube is 0.1-5 parts by mass of the carbon nanotube to 100 parts by mass of the metallic material.

5. A carbon nanotube orientated composite according to claim 3 or 4, wherein the metallic material is one or more of a metal selected from Al, Cu and Mg or an alloy containing the selected metal.

6. A carbon nanotube orientated composite according to any one of claims 3 to 5, wherein a heat conductivity of the carbon nanotube in the orientated direction is not less than 300 W/m · K.

7. A carbon nanotube orientated composite according to claim 1 or 2, wherein the matrix contains a rubber component.

8. A carbon nanotube orientated composite according to claim 7, wherein a compounding ratio of the rubber component and the carbon nanotube is 5-100 parts by mass based on 100 parts by mass of the rubber component.

9. A carbon nanotube orientated composite according to claim 7 or 8, wherein the rubber component is butyl rubber.

10. A carbon nanotube orientated composite according to any one of claims 7 to 9, wherein a heat conductivity of the carbon nanotube in the orientated direction is not less than 0.15 W/m · K.

11. A method of producing carbon nanotube orientated composite as claimed in any one of claims 3 to 6, which comprises fluidizing a melt dispersed carbon nanotubes into a molten metallic material and cooling and solidifying the melt on the way of the fluidization to orientate the carbon nanotubes.

12. A method of producing carbon nanotube orientated composite as claimed in any one of claims 7 to 10, which comprises milling a rubber component and carbon nanotubes, extruding the milled mass through an extruder and drawing the extruded mass at a drawing rate faster than an extrusion rate.

13. A pneumatic tire in which carbon nanotube orientated composites as claimed in any one of claims 7 to 10 are arranged in parallel to each other and covered with a coating rubber to form a heat releasing member, and the heat releasing member is arranged so that one end of the carbon nanotube orientated composite is exposed at an outer surface of the tire and the other end thereof is positioned in an interior of the tire.

14. A pneumatic tire according to claim 13, wherein the heat releasing member is arranged in the vicinity of at least one of an end of a belt and an turnup end of a carcass.

15. A pneumatic tire according to claim 13 or 14, wherein the heat releasing member has a thickness of 1-5 mm.

16. A wheel for a vehicle provided with a rim enclosing an interior portion of a tire in consort with the tire, in which the carbon nanotube orientated composite as claimed in any one of claims 3 to 6 is arranged so as to pass through the rim in its thickness direction, and an end of the carbon nanotube orientated composite is positioned in a portion contacting with the tire or a portion exposing to the interior portion of the tire and the other end thereof is positioned in a portion exposing to an atmosphere.

17. A wheel for a vehicle according to claim 16, wherein a high heat conductive member having a heat conductivity of not less than 300 W/m · K is coated onto a surface of the rim, and the high heat conductive member is extended from a first portion contacting with the tire or exposing to the interior portion of the tire to a second portion exposing to the atmosphere.

18. The invention is a wheel for a vehicle according to claim 17, wherein the high heat releasing member is an alloy of a metal selected from the group consisting of Al, Mg and Cu or a sintered body of the selected metal and a diamond.

19. A wheel for a vehicle according to claim 17 or 18, wherein a cooling means is arranged on an exposed surface of the second portion of the high heat conductive member.

20. A wheel for a vehicle according to claim 19, wherein a cooling fin is arranged on the surface as the cooling means.

21. A wheel for a vehicle according to any one of claims 16 to 20, wherein a heat collecting fin is arranged on a portion contacting with the interior of the tire.

22. A tire-wheel assembly comprising a wheel for a vehicle as claimed in any one of claims 16 to 21 and a tire mounted on the wheel for the vehicle and a gas inclusive of at least helium gas filled in an interior of the tire defined between the tire and the wheel.

23. A tire-wheel assembly comprising a wheel for a vehicle as claimed in any one of claims 16 to 22 and a tire mounted on the wheel for the vehicle and elastic balls filled in an interior of the tire defined between the wheel and the tire.

24. A disc brake comprising a rotor and a pad decelerating the rotor while sliding to the rotating rotor, in which a carbon nanotube orientated composite as claimed in any one of claims 3 to 6 is arranged on at least one part of the rotor and the pad, and an end of the carbon nanotube orientated composite is exposed to a sliding surface of the part or located in the vicinity of the sliding surface and the other end thereof is exposed to a surface other than the sliding surface of the part.

25. A disc brake according to claim 24, which further comprises a cooling means for cooling the surface of the part exposing the other end.

26. A disc brake according to claim 25, wherein the cooling means is a cooling fin disposed on the surface.
